# EUROPÄISCHE PATENTSCHRIFT

(11) **EP 2 696 033 B1**
(45) Veröffentlichungstag und Bekanntmachung des Hinweises auf die Patenterteilung: **06.06.2018**
(21) Anmeldenummer: 12179983.7
(22) Anmeldetag: 10.08.2012
(51) Int. Cl.: F01D 5/30

(54) **Schaufelelement einer Strömungsmachine mit duktiler Ausgleichsschicht, zugehörige Strömungsmachine, Verfahren zur Herstellung des Schaufelelements und der Strömungsmachine**
Blade element of a turbomachine with a ductile compensation layer, corresponding turbomachine, methods of manufacturing of the blade element and of the turbomachine
Elément d'aube d'une turbomachine avec couche de compensation ductile, turbomachine associée, procédé de fabrication d'elément d'aube et de turbomachine

(43) Veröffentlichungstag der Anmeldung: 12.02.2014
(73) Patentinhaber: MTU Aero Engines AG, 80995 München (DE)
(72) Erfinder: Steinhardt, Erich, 81377 München (DE); Smarsly, Wilfried, 81669 München (DE); Werner, André, 80639 München (DE)

(56) Entgegenhaltungen:
- EP-A1- 1 561 905
- DE-A1-102005 054 172
- DE-A1-102009 030 398
- US-A- 5 106 266

## Beschreibung

### HINTERGRUND DER ERFINDUNG

### GEBIET DER ERFINDUNG

Die vorliegende Erfindung betrifft ein Schaufelelement einer Strömungsmaschine, insbesondere einer Gasturbine, vorzugsweise eines Flugtriebwerks mit einem Befestigungselement, mit dem das Schaufelelement in einer Aufnahme der Strömungsmaschine angeordnet ist, wobei das Schaufelelement im Bereich des Befestigungselements einen Kernbereich und einen den Kernbereich zumindest teilweise umhüllenden Hüllenbereich aufweist und wobei der Kernbereich aus einem Schaufelgrundmaterial gebildet ist, welches spröder als das Hüllenmaterial des Hüllenbereichs ist. Darüber hinaus betrifft die vorliegende Erfindung eine entsprechende Strömungsmaschine mit einem derartigen Schaufelelement sowie eine Strömungsmaschine, bei welcher ein Schaufelelement mit einem Befestigungselement in einer Aufnahme einer Strömungsmaschine angeordnet ist. Ferner betrifft die vorliegende Erfindung entsprechende Verfahren zur Herstellung von Schaufelelementen bzw. Strömungsmaschinen.

### STAND DER TECHNIK

Aus der DE 10 2005 054 172 A1, welche ein Schaufelelement gemäß dem Oberbegriff von Anspruch 1 und eine Strömungsmaschine gemäß dem Oberbegriff von Anspruch 8 offenbart, ist eine Schaufel einer Turbomaschine bekannt, bei welcher am Schaufelfuß der Schaufel aus einem wenig duktilen bis spröden Material, wie beispielsweise aus einem TiAl - Werkstoff, eine duktile Ausgleichsschicht vorgesehen ist, um Spannungsspitzen beim Kontakt des Schaufelfußes mit einer Schaufelfußaufnahme, in der die Schaufel angeordnet ist, abzubauen, so dass der spröde Werkstoff der Schaufel gegen Rissbildung oder Zerstörung durch Bruch geschützt wird. Alternativ könnte ein entsprechender Schaufelfuß auch unter Einhaltung sehr enger Toleranzen gefertigt werden oder es könnten entsprechende ballige Formen ausgebildet werden, um bereits das Auftreten von Spannungsspitzen zu vermeiden. Allerdings sind diese Maßnahmen sehr aufwändig, so dass das Vorsehen von duktilen Ausgleichsschichten eine vorteilhafte Alternative ist.

Allerdings besteht bei den Ausgleichsschichten eine Problematik darin, dass unter Umständen die Lebensdauer der Ausgleichsschichten sehr gering ist und trotz Vorsehen entsprechender Ausgleichsschichten die Spannungsspitzen noch nicht ausreichend vermieden bzw. abgebaut werden können.

Der Vollständigkeit halber sei zudem noch auf die Druckschriften DE 10 2009 030398 A1, EP 1 561 905 A1 und US 5 106 266 A hingewiesen, die ähnliche Schaufelelemente offenbaren

### OFFENBARUNG DER ERFINDUNG

### AUFGABE DER ERFINDUNG

Entsprechend ist es Aufgabe der vorliegenden Erfindung, bei Bauteilen einer Strömungsmaschine, die aus wenig duktilen bzw. spröden Materialien gebildet sind, wie beispielsweise Schaufeln aus TiAl - Werkstoffen, einen verbesserten Abbau von Spannungsspitzen über einen längeren Zeitraum zu ermöglichen, so dass die Herstelltoleranzen für diese Bauteile weiter reduziert werden können und eine Erhöhung der Lebensdauer erreicht wird. Darüber hinaus soll auf das Vorsehen von balligen Strukturen zur Vermeidung von Spannungsspitzen verzichtet werden. Ferner soll vermieden werden, dass zur Lösung der Lagerungsprobleme, also beispielsweise Vermeidung der Rissbildung bei Schaufeln bei der Anordnung von Schaufelfüßen in Schaufelfußaufnahmen, Modifikationen an den verwendeten Grundwerkstoffen vorgenommen werden müssen. Alternativ soll die Erfindung einen variableren Einsatz von Grundwerkstoffen ermöglichen, um so die Designfreiheiten zu erhöhen.

### TECHNISCHE LÖSUNG

Diese Aufgabe wird gelöst durch ein Schaufelelement mit den Merkmalen des Anspruchs 1 sowie eine Strömungsmaschine mit den Merkmalen des Anspruchs 8. Ferner schlägt die vorliegende Erfindung ein Verfahren zur Herstellung einer Strömungsmaschine mit den Merkmalen des Anspruchs 13 und ein Verfahren zur Herstellung eine Schaufelelements mit den Merkmalen des Anspruchs 14 vor. Vorteilhafte Ausgestaltungen sind Gegenstand der abhängigen Ansprüche.

Gemäß der vorliegenden Erfindung wird bei einem Schaufelelement, wie beispielsweise einer einzelnen Schaufel oder eines Schaufelkranzsegments, einer Strömungsmaschine, welches ein Befestigungselement mit einem spröden Kernbereich und einen duktilen Hüllenbereich (Ausgleichsschicht) zur Anordnung in einer Aufnahme einer anderen Komponente aufweist, vorgeschlagen, als Hüllenmaterial einen pseudo- oder superelastischen Werkstoff vorzusehen.

Durch das Vorsehen eines in der Duktilität modifizierten Schaufelgrundmaterials, also eines Materials, das auch bereits im Kernbereich des Schaufelelements bzw. eines entsprechenden Befestigungselements des Schaufelelements vorliegt, kann eine Erhöhung der Lebensdauer erreicht werden, da durch die artverwandte Ausbildung des Hüllenmaterials zum Schaufelgrundmaterial eine Ablösung des Hüllenbereichs im Betrieb vermieden wird.

Durch die Verwendung von pseudo- oder superelastischen Werkstoffen kann eine besonders hohe Duktilität der Ausgleichsschicht bzw. des Hüllenbereichs ermöglicht werden, so dass ein starker Abbau von Spannungsspitzen gewährleistet wird.

Unter pseudo- bzw. superelastischem Werkstoff wird jedes Material verstanden, welches eine hohe elastische Verformung durch entsprechende Phasenumwandlungen innerhalb des Werkstoffs bereitstellen kann, wie dies bei Formgedächtnislegierungen der Fall ist.

Darüber hinaus schlägt die vorliegende Erfindung nach einem weiteren Aspekt, für den unabhängig und in Kombination mit anderen Aspekten der vorliegenden Erfindung Schutz begehrt wird, vor, anstelle des Befestigungselements eines Schaufelelements oder zusätzlich dazu den Oberflächenbereich einer Aufnahme, in der ein Schaufelelement angeordnet wird, mit einer entsprechend duktilen Ausgleichsschicht zu versehen, wobei die Duktilität der Ausgleichsschicht, also des Aufnahmeoberflächenmaterials, größer sein soll als die Duktilität des Schaufelgrundmaterials, wobei das Aufnahmeoberflächenmaterial ein pseudo- oder superelastischer Werkstoff ist, um so den Abbau von Spannungsspitzen bei einem entsprechenden Kontakt des Befestigungselements mit der Aufnahme zu ermöglichen.

Zur Ausbildung eines duktilen Oberflächenbereichs einer Aufnahme kommen im Wesentlichen dieselben Materialien in Frage, die auch beim duktilen Hüllenbereich eines Schaufelelements eingesetzt werden.

Die pseudo- oder superelastischen Legierungen zur Bildung von duktilen Ausgleichsschichten in Form von Hüllenbereichen auf Schaufelelementen oder duktilen Oberflächenbereichen an Aufnahmen können auf Basis der Systeme Kobalt-Nickel-Aluminium, Kobalt-Nickel-Gallium, Aluminium-Nickel-Kobalt oder Nickel-Mangan-Gallium gebildet sein. Insbesondere bieten sich pseudo- bzw. superelastischen Legierungen auf Basis von Aluminium-Nickel-Kobalt an, da diese sowohl als superelastische Legierungen zum Einsatz kommen können als auch bei einer quasikristallinen Struktureinstellung eine ausreichende Härte aufweisen, um einen Verschleißschutz bieten zu können, so dass eine entsprechende Kombination von derartigen Schichten mit einer guten gegenseitigen Haftung möglich ist. Hier bietet sich insbesondere eine Legierung Al35Ni20Co20 an.

Auf dem Hüllenbereich kann allgemein eine Verschleißschutzschicht aufgebracht sein, um die Lebensdauer zu erhöhen. Als Verschleißschutzschicht kommen bekannte Verschleißschutzsysteme in Frage, aber insbesondere Verschleißschutzschichten auf Basis von quasikristallinen Strukturen, wie beispielsweise die vorher erwähnte Legierung Al35Ni20Co20, Allerdings sind auch andere quasikristallinen Strukturen wie Ti60(Mn,Fe,Cr)25Si5O10 oder Ti45Cr38Ni17 möglich. Quasikristalline Materialien zeichnen sich durch eine geordnete, aber aperiodische Struktur aus und besitzen ein hohe Härte und gute Oxidationsbeständigkeit, so dass sie als Verschleißschutzschichten für duktile Ausgleichsschichten in den vorliegenden Anwendungsfällen besonders geeignet sind.

Der Hüllenbereich des Schaufelelements, der ebenso wie die Aufnahmeoberfläche als Beschichtung aufgebracht sein kann, kann genauso wie die Aufnahmeoberfläche mit verschiedensten Beschichtungsverfahren aufgebracht werden, wie beispielsweise durch thermische Verfahren, insbesondere thermische Spritzverfahren oder kaltgaskinetisches Spritzen (kinetische Kaltgaskompaktierung K3-Verfahren). Auch Abscheidungen aus der Gasphase über chemische Dampfphasenabscheidung (chemical vapor deposition CVD) oder physikalische Dampfphasenabscheidung (physical vapor deposition PVD) sind einsetzbar.

Bei der Abscheidung der Schichten können diese porös oder kompakt abgeschieden werden. Insbesondere beim Vorsehen einer Verschleißschutzschicht können die Ausgleichsschichten in Form des Hüllenbereichs oder des Aufnahmeoberflächenbereichs kompakt abgeschieden werden, während bei einer porösen Abscheidung ein Schmierstoff zur Verringerung der Reibung zwischen Befestigungselement des Schaufelelements und der Aufnahme eingesetzt werden kann.

Das Befestigungselement des Schaufelements kann insbesondere ein Schaufelfuß sein, der in einer Schaufelfußaufnahme einer Turbinenscheibe angeordnet ist, so dass also die Aufnahme durch die Schaufelfußaufnahme gebildet ist. Der Grundwerkstoff der Schaufel kann insbesondere ein TiAl - Werkstoff sein, wobei unter TiAl - Werkstoff jeder Werkstoff verstanden wird, der als Bestandteile mit den größten Anteilen Titan und Aluminium aufweist oder intermetallische Phasen wie (α₂-Ti₃Al oder γ-TiAl umfasst. Darüber hinaus können die TiAl - Werkstoffe weitere Legierungselement umfassen, wie Niob oder Mangan.

Die Angabe von Werkstoffsystemen auf Basis von bestimmten chemischen Elementen bedeutet, dass die Materialien im Wesentlichen diese Elemente umfassen. Insbesondere kann die Summe der Anteile den überwiegenden Anteil ausmachen oder die einzelnen Anteile der genannten chemischen Elemente stellen die größten Anteile des Werkstoffs dar. Bei den Werkstoffangaben, bei denen hinter den Symbolen der chemischen Elemente Zahlen in der gleichen Ebene angegeben sind, bedeuten die Zahlen die Anteile der chemischen Elemente in Gew.%. Bei chemischen Formeln mit tiefgestellten Zahlen handelt es sich Angaben über die jeweiligen Anteile in der Verbindung, wie z.B. bei intermetallischen Phasen.

### BESCHREIBUNG DER FIGUREN

Die beigefügten Zeichnungen zeigen in rein schematischer Weise in
- Fig. 1: einen Querschnitt durch einen Schaufelfuß einer Schaufel einer Strömungsmaschine, die in einer Schaufelaufnahme in einer Scheibe der Strömungsmaschine angeordnet ist;
- Fig. 2: eine teilweise Schnittdarstellung durch einen Oberflächenbereich des Schaufelfußes aus Fig. 1; und in
- Fig. 3: eine Schnittansicht durch einen Oberflächenbereich eines Schaufelfußes nach einer weiteren Ausführungsform.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

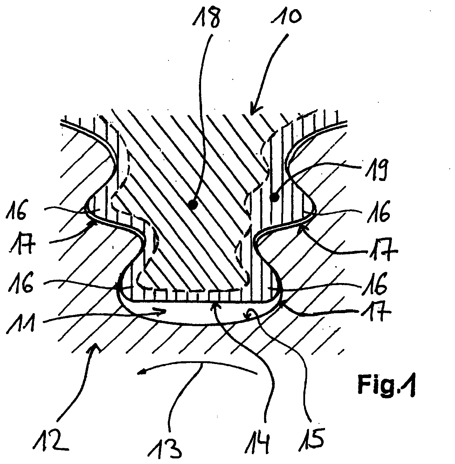

Die Fig. 1 zeigt einen schematisierten Querschnitt durch ein als Schaufelfuß ausgebildetes Befestigungselement 10 einer Gasturbinenlaufschaufel, wobei das Befestigungselement 10 der Gasturbinenlaufschaufel in einem Aufnahmeabschnitt 11 (Schaufelfußaufnahme) eines Rotors 12 positioniert ist. Im Betrieb rotiert die Gasturbinenschaufel zusammen mit dem Rotor in Richtung des in Fig. 1 dargestellten Pfeils 13.

Das Befestigungselement 10 der Gasturbinenlaufschaufel verfügt über eine tannenbaumförmig gestaltete Außenkontur 14, wobei eine Innenkontur 15 des Aufnahmeabschnitts 11 an die Außenkontur 14 des Befestigungselements 10 angepasst ist. Das tannenbaumförmig konturierte Befestigungselement 10 verfügt über Vorsprünge 16, die in entsprechend konturierte Ausnehmungen 17 des Aufnahmeabschnitts 11 eingreifen.

Im Sinne der hier vorliegenden Erfindung ist das Befestigungselement 10 der Gasturbinenlaufschaufel aus zwei funktional voneinander getrennten Bereichen gebildet, nämlich aus einem Kernbereich 18 und einem den Kernbereich 18 allseits umhüllenden Hüllenbereich 19. Der Kernbereich 18 ist demnach im Hüllenbereich 19 eingebettet.

Der Kernbereich 18 des Befestigungselements 10 ist erfindungsgemäß aus einem relativ spröden sowie relativ leichten Werkstoff gebildet, der eine relativ geringe Duktilität aufweist. So kann der Kernbereich 18 aus einem keramischen Werkstoff oder aus einem intermetallischen Werkstoff gebildet sein. Dann, wenn der Kernbereich 18 aus einem intermetallischen Werkstoff gebildet ist, ist derselbe vorzugsweise aus einem TiAl - Werkstoff gebildet.

Der Hüllenbereich 19, in welchen der Kernbereich 18 eingebettet ist, ist erfindungsgemäß aus einem Werkstoff mit einer relativ hohen Duktilität, einem pseudo- oder superelastischem Werkstoff, gebildet. Der Hüllenbereich 19 kann aus einem metallischen Werkstoff gebildet sein, der an den metallischen Werkstoff des Rotors 12 angepasst ist, also eine ähnliche jedoch nicht identische Werkstoffzusammensetzung wie der Rotor aufweist. Im gezeigten Ausführungsbeispiel der Fig. 1 ist der Hüllenbereich 19 einschichtig bzw. einlagig ausgeführt. Alternativ kann der Hüllenbereich auch mehrschichtig bzw, mehrlagig ausgebildet sein.

Im gezeigten Ausführungsbeispiel der Fig. 1 ist der Hüllenbereich 19 relativ dick ausgeführt und auf eine nicht endkonturgenaue Außenkontur des Kernbereichs 18 aufgebracht. Der Hüllenbereich 19 des Befestigungselements 10 ist derart bearbeitet, dass die Außenkontur 14 desselben, welche die Außenkontur des Befestigungselements 10 definiert, an die Innenkontur 15 des Aufnahmebereichs 11 des Rotors 12 angepasst ist. In diesem Fall kann der Kernbereich 18 des Befestigungselements 10, der aus dem relativ spröden sowie relativ leichten Werkstoff gebildet ist, eine beliebige Kontur aufweisen. Der Hüllenbereich 19, der aus einem metallischen Werkstoff gebildet ist, ist mit geläufigen Bearbeitungsverfahren auf die gewünschte Endkontur anpassbar.

Im Unterschied hierzu ist es auch möglich, dass bereits der Kernbereich 18 eine endkonturgenaue Außenkontur aufweist und hinsichtlich seiner Abmessungen lediglich um die Dicke des Hüllenbereichs 19 reduziert ist. In diesem Fall ist der Hüllenbereich 19 relativ dünn ausgeführt, da in diesem Fall keine endkonturgenaue Bearbeitung desselben erforderlich ist.

Im Ausführungsbeispiel der Fig. 1 wurde davon ausgegangen, dass es sich bei dem Befestigungselement 10 um einen Schaufelfuß einer Gasturbinenlaufschaufel handelt. Wie bereits erwähnt, ist die Erfindung jedoch nicht auf die Verwendung an rotierenden Laufschaufeln begrenzt, vielmehr kann die Erfindung auch an feststehenden Leitschaufeln zum Einsatz kommen. Derartige feststehende Leitschaufeln können über mehrere hakenartige, flanschartige oder zapfenartige Befestigungselemente verfügen, wobei dann vorzugsweise jedes Befestigungselement der feststehenden Leitschaufeln, wie unter Bezugnahme auf Fig. 1 für eine Laufschaufel beschrieben, ausgebildet ist.

Alternativ kann anstelle des Oberflächenbereichs des Schaufelfußes oder zusätzlich dazu auch der Oberflächenbereich der Schaufelaufnahme mit dem duktilen Werkstoff beschichtet sein. In diesem Fall übernimmt (auch) die Oberfläche bzw. Beschichtung der Schaufelfußaufnahme bei entsprechenden Belastungen den Abbau von Belastungsspitzen, indem sich der Schaufelfuß in die duktile Oberfläche bzw. Beschichtung der Schaufelfußaufnahme eindrückt.

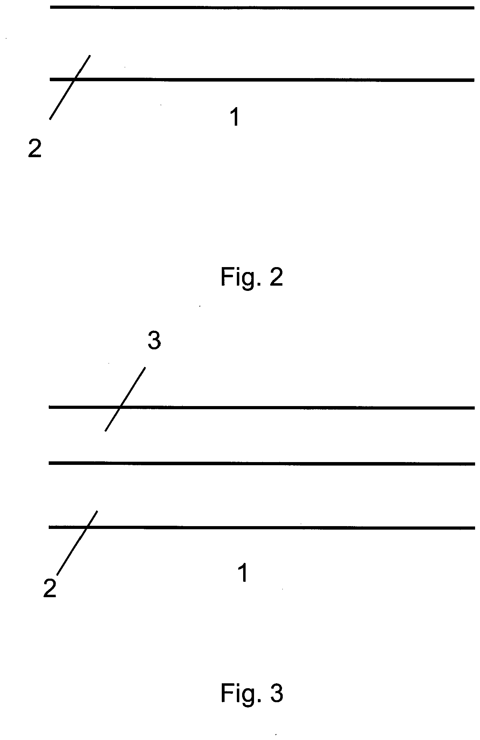

Figuren 2 und 3 zeigen in rein schematischer Weise einen entsprechenden beispielhaften Aufbau eines Oberflächenbereichs des Schaufelfußes oder der Oberfläche der Schaufelfußaufnahme. Mit Bezugszeichen 1 ist der Grundwerkstoff bezeichnet, auf der eine Ausgleichsschicht 2 aus einem duktilen Material aufgebracht ist. Wenn der Grundwerkstoff 1 aus einem TiAl - Werkstoff gebildet ist, kann die Ausgleichsschicht 2 ebenfalls aus einem TiAl - Werkstoff gebildet sein, der jedoch eine höhere Duktilität aufweist als der Grundwerkstoff 1. Dies kann beispielsweise durch eine veränderte chemische Zusammensetzung des TiAl - Werkstoffs erreicht werden oder durch eine entsprechende Wahl der Abscheidebedingungen des TiAl - Werkstoffs und einer geeigneten Gefügeeinstellung.

Darüber hinaus kann die Ausgleichsschicht aus super- bzw. pseudoelastischen Materialien auf Basis des Systems Co-Ni-Al, Co-Ni-Ga, Al-Ni-Co oder Ni-Mn-Ga gebildet sein. Insbesondere kann die Ausgleichsschicht aus der intermetallischen Phase Ni₂MnGa gebildet sein.

Die Ausgleichsschicht 2 kann porös abgeschieden sein oder als kompakte Schicht, bei der nahezu keine Poren oder Freiräume gebildet sind, ausgeführt sein. Bei einer porösen Schicht kann ein Schmiermittel auf die Oberfläche aufgebracht werden, welches die Reibung zwischen Schaufelfuß und Schaufelfußaufnahme reduziert und somit einem Verschleiß entgegenwirkt.

Bei einer kompakten Ausbildung der Ausgleichsschicht 2 kann eine Verschleißschutzschicht 3 vorgesehen sein, wie sie in Fig. 3 dargestellt ist. Für die Verschleißschutzschicht kommen verschiedene Möglichkeiten in Betracht, wobei insbesondere Verschleißschutzschichten aus quasikristallinen Materialien wie beispielsweise Te60(Mn,Fe,Cr)25Si5O10, Ti45Zr38Ni17 oder Al65Ni20Co15 eingesetzt werden können. Insbesondere die Verwendung von Al65Ni20Co15 für die Ausgleichsschicht 2 und die Verschleißschutzschicht 3 ist vorteilhaft, da ein derartiges Material sowohl superelastische Eigenschaften aufweisen kann als auch bei einer quasikristallinen Struktureinstellung einen Verschleißschutz bietet. Dies gilt auch für weitere Materialien auf der Basis von Al-Ni-Co, Aufgrund einer Modifizierung von Legierungen auf Basis von Al-Ni-Co ist deshalb eine vorteilhafte Kombination von sehr ähnlichen Schichten mit Verschleißschutzeigenschaften bei quasikristalliner Struktureinstellung und Bereitstellung einer hohen Duktilität durch superelastische bzw. pseudoelastische Effekte möglich. Hierzu bedarf es lediglich geringfügiger Änderungen der chemischen Zusammensetzung, so dass entsprechende Schichten aufgrund ihrer ähnlichen chemischen Zusammensetzung gut aufeinander haften.

Obwohl die vorliegende Erfindung anhand der Ausführungsbeispiele detailliert beschrieben worden ist, ist für einen Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen werden oder andersartige Kombinationen von Merkmalen verwirklicht werden, ohne dass der Schutzbereich der beigefügten Ansprüche verlassen wird.

## Patentansprüche

1. Schaufelelement einer Strömungsmaschine, insbesondere einer Gasturbine, vorzugsweise eines Flugtriebwerks, mit einem Befestigungselement (10) zur Anordnung in einer Aufnahme (11) der Strömungsmaschine, wobei das Schaufelelement im Bereich des Befestigungselements einen Kernbereich (18) und einen den Kernbereich zumindest teilweise umhüllenden Hüllenbereich (2,19) aufweist, und wobei der Kernbereich aus einem Schaufelgrundmaterial gebildet ist, welches spröder als das Hüllenmaterial des Hüllenbereichs ist, und wobei der Hüllenbereich durch eine Beschichtung gebildet ist,
**dadurch gekennzeichnet, dass**
das Müllenmaterial ein pseudo- oder superelastischer Werkstoff ist.

2. Schaufelelement nach Anspruch 1,
**dadurch gekennzeichnet, dass**
das Hüllenmaterial durch eine pseudo- oder superelastische Legierung auf Basis von Co-Ni-Al, Co-Ni-Ga, Al-Ni-Co oder Ni-Mn-Ga, insbesondere durch Al35Ni20Co20 oder Ni₂MnGa gebildet ist.

3. Schaufelelement nach Anspruch 1 oder 2,
**dadurch gekennzeichnet, dass**
auf dem Hüllenbereich (2) eine Verschleißschutzschicht (3) aufgebracht ist.

4. Schaufelelement nach Anspruch 3,
**dadurch gekennzeichnet, dass**
die Verschleißschutzschicht (3) durch eine pseudo- oder superelastische Legierung oder durch Werkstoffe auf Basis von Quasikristallen gebildet ist.

5. Schaufelelement nach einem der vorhergehenden Ansprüche 3 bis 4,
**dadurch gekennzeichnet, dass**
die Verschleißschutzschicht (3) Ti60(Mn,Fe,Cr)25Si5O10, Ti45Zr38Ni17 oder Al35Ni20Co20 umfasst.

6. Schaufelelement nach einem der vorhergehenden Ansprüche,
**dadurch gekennzeichnet, dass**
der Hüllenbereich (2) porös oder kompakt ausgebildet ist.

7. Schaufelelement nach einem der vorhergehenden Ansprüche,
**dadurch gekennzeichnet, dass**
das Befestigungselement (10) ein Schaufelfuß und/oder das Schaufelgrundmaterial ein TiAl - Werkstoff ist.

8. Strömungsmaschine, insbesondere Gasturbine, vorzugsweise Flugtriebwerk, mit einem Schaufelelement, insbesondere nach einem der vorhergehenden Ansprüche, und einer Aufnahme (11), in dem das Schaufelelement angeordnet ist, wobei das Schaufelelement ein Befestigungselement (10) umfasst, mit dem das Schaufelelement in der Aufnahme der Strömungsmaschine angeordnet ist, wobei das Schaufelelement im Bereich des Befestigungselements (10) ein Schaufelgrundmaterial aufweist, wobei die Aufnahme im Bereich einer Kontaktfläche mit dem Befestigungselement (10) eine Aufnahmeoberfläche aufweist, die aus einem Aufnahmeoberflächenmaterial gebildet ist, welches eine höhere Duktilität aufweist als das Schaufelgrundmaterial, **dadurch gekennzeichnet, dass** die Aufnahmeoberfläche (2) durch einen pseudo- oder superelastischen Werkstoff gebildet ist.

9. Strömungsmaschine nach Anspruch 8,
**dadurch gekennzeichnet, dass**
die Aufnahmeoberfläche (2) durch eine Beschichtung gebildet ist.

10. Strömungsmaschine nach einem der Ansprüche 8 bis 9,
**dadurch gekennzeichnet, dass**
die Aufnahmeoberfläche (2) durch eine pseudo- oder superelastische Legierung auf Basis von Co-Ni-Al, Co-Ni-Ga, Al-Ni-Co oder Ni-Mn-Ga, insbesondere durch Al35Ni20Co20 oder Ni₂MnGa gebildet ist.

11. Strömungsmaschine nach einem der Ansprüche 8 bis 10,
**dadurch gekennzeichnet, dass**
die Aufnahmeoberfläche (2) porös oder kompakt ausgebildet ist.

12. Strömungsmaschine nach einem der Ansprüche 8 bis 11,
**dadurch gekennzeichnet, dass**
das Befestigungselement (10) ein Schaufelfuß und die Aufnahme (11) eine Schaufelfußaufnahme und/oder das Schaufelgrundmaterial ein TiAl - Werkstoff ist.

13. Verfahren zur Herstellung einer Strömungsmaschine nach einem der Ansprüche 8 bis 12, bei welchem eine Aufnahme, in der ein Schaufelelement angeordnet werden kann, bereitgestellt wird, wobei das Schaufelelement ein Befestigungselement umfasst, mit dem das Schaufelelement in der Aufnahme der Strömungsmaschine angeordnet wird, und wobei das Schaufelelement im Bereich des Befestigungselements ein Schaufelgrundmaterial aufweist, wobei die Aufnahme im Bereich einer Kontaktfläche mit dem Befestigungselement mit einem Aufnahmeoberflächenmaterial beschichtet wird, welches eine höhere Duktilität aufweist als das Schaufelgrundmaterial, **dadurch gekennzeichnet, dass** das Aufnahmeoberflächenmaterial durch einen pseudo- oder superelastischen Werkstoff gebildet ist, wobei die Beschichtung durch kinetisches Kaltgasspritzen, thermische Spritzverfahren oder durch Abscheidung aus der Gasphase erfolgt.

14. Verfahren zur Herstellung eines Schaufelelements einer Strömungsmaschine nach einem der Ansprüche 1 bis 7. bei welchem ein Schaufelgrundkörper mit einem Befestigungselement, mit dem das Schaufelelement in einer Aufnahme der Strömungsmaschine angeordnet werden kann, bereitgestellt wird, wobei der Schaufelgrundkörper aus einem Schaufelgrundmaterial gebildet ist, und wobei auf dem Schaufelgrundkörper ein Hüllenbereich mittels Beschichtung angeordnet wird, wobei der Hüllenbereich ein Hüllenmaterial umfasst, welches duktiler als das Schaufelgrundmaterial des Schaufelgrundkörpers ist,
**dadurch gekennzeichnet, dass**
das Hüllenmaterial ein pseudo- oder superelastischer Werkstoff ist, welches durch kinetisches Kaltgasspritzen, thermische Spritzverfahren oder durch Abscheidung aus der Gasphase aufgebracht wird.

## Claims

1. Blade element of a turbomachine, in particular a gas turbine, preferably an aircraft engine, comprising a fastening element (10) to be arranged in a receptacle (11) of the turbomachine, the blade element comprising a core region (18) in the region of the fastening element, and an envelope region (2, 19) that envelops the core region at least in part, and the core region being formed of a blade base material that is more brittle than the envelope material of the envelope region, and the envelope region being formed by a coating, **characterized in that** the envelope material is a pseudoelastic or superelastic material.

2. Blade element according to claim 1, **characterized in that** the envelope material is formed by a pseudoelastic or superelastic alloy based on Co-Ni-Al, Co-Ni-Ga, Al-Ni-Co or Ni-Mn-Ga, in particular is formed by Al35Ni20Co20 or Ni₂MnGa.

3. Blade element according to either claim 1 or claim 2, **characterized in that** a wear-resistant layer (3) is applied to the envelope region (2).

4. Blade element according to claim 3, **characterized in that** the wear-resistant layer (3) is formed by a pseudoelastic or superelastic alloy or by materials based on quasicrystals.

5. Blade element according to either of the preceding claims 3 or 4, **characterised in that** the wear-resistant layer (3) comprises Ti60(Mn,Fe,Cr)25Si5O10, Ti45Zr38Ni17 or Al35Ni20Co20.

6. Blade element according to any of the preceding claims, **characterized in that** the envelope region (2) is porous or solid.

7. Blade element according to any of the preceding claims, **characterized in that** the fastening element (10) is a blade root and/or the blade base material is a TiAl material.

8. Turbomachine, in particular a gas turbine, preferably an aircraft engine, comprising a blade element, in particular according to any of the preceding claims, and a receptacle (11) in which the blade element is arranged, the blade element comprising a fastening element (10) by means of which the blade element is arranged in the receptacle of the turbomachine, the blade element comprising a blade base material in the region of the fastening element (10), the receptacle comprising a receptacle surface in the region of a surface in contact with the fastening element (10), which receptacle surface is formed of a receptacle surface material that is of a higher ductility than the blade base material, **characterized in that** the receptacle surface (2) is formed by a pseudoelastic or superelastic material.

9. Turbomachine according to claim 8, **characterized in that** the receptacle surface (2) is formed by a coating.

10. Turbomachine according to either claim 8 or claim 9, **characterized in that** the receptacle surface (2) is formed by a pseudoelastic or superelastic alloy based on Co-Ni-Al, Co-Ni-Ga, Al-Ni-Co or Ni-Mn-Ga, in particular is formed by Al35Ni20Co20 or Ni₂MnGa.

11. Turbomachine according to any of claims 8 to 10, **characterized in that** the receptacle surface (2) is porous or solid.

12. Turbomachine according to any of claims 8 to 11, **characterized in that** the fastening element (10) is a blade root and the receptacle (11) is a blade foot receptacle and/or the blade base material is a TiAl material.

13. Method for producing a turbomachine according to any of claims 8 to 12, in which a receptacle, in which a blade element can be arranged, is provided, the blade element comprising a fastening element by means of which the blade element is arranged in the receptacle of the turbomachine, and the blade element comprising a blade base material in the region of the fastening element, the receptacle being coated, in the region of a surface in contact with the fastening element, with a receptacle surface material that is of a higher ductility than the blade base material, **characterized in that** the receptacle surface material is formed by a pseudoelastic or superelastic material, the coating being performed by kinetic cold spraying, thermal gun spraying, or by deposition from the vapor phase.

14. Method for producing a blade element of a turbomachine according to any of claims 1 to 7, in which a blade main body is provided, which body comprises a fastening element by means of which the blade element can be arranged in a receptacle of the turbomachine, the blade main body being formed of a blade base material, and, and an envelope region being arranged on the blade main body by means of coating, the envelope region comprising an envelope material that is more ductile than the blade base material of the blade main body, **characterized in that** the envelope material is a pseudoelastic or superelastic material that is applied by means of kinetic cold spraying, thermal gun spraying, or by deposition from the vapor phase.

## Revendications

1. Elément d'aube d'une turbomachine, notamment d'une turbine à gaz, de préférence d'un moteur d'aéronef, comprenant un élément de fixation (10) destiné à être disposé dans un logement (11) de la turbomachine, l'élément d'aube comportant au niveau de l'élément de fixation une région interne (18) et une région externe (2, 19) entourant au moins partiellement la région interne, et la région interne étant formée à partir d'une matière de base d'aube qui est plus fragile que la matière externe de la région externe, et la région externe étant formée par un revêtement,
**caractérisé en ce que**
la matière externe est une matière pseudo-élastique ou super-élastique.

2. Elément d'aube selon la revendication 1,
**caractérisé en ce que**
la matière externe est formée par un alliage pseudo-élastique ou super-élastique à base de Co-Ni-Al, Co-Ni-Ga, Al-Ni-Co ou Ni-Mn-Ga, en particulier par Al35Ni20Co20 ou Ni2MnGa.

3. Elément d'aube selon la revendication 1 ou 2,
**caractérisé en ce que**
une couche anti-usure (3) est appliquée sur la région externe (2).

4. Elément d'aube selon la revendication 3,
**caractérisé en ce que**
la couche anti-usure (3) est formée par un alliage pseudo-élastique ou super-élastique ou par des matières à base de quasi-cristaux.

5. Elément d'aube selon l'une des revendications précédentes 3 à 4,
**caractérisé en ce que**
la couche anti-usure (3) contient du Ti60(Mn,Fe,Cr)25Si5O10, du Ti45Zr38Ni17 ou du Al35Ni20Co20.

6. Elément d'aube selon l'une des revendications précédentes,
**caractérisé en ce que**
la région externe (2) est conçue pour être poreuse ou compacte.

7. Elément d'aube selon l'une des revendications précédentes,
**caractérisé en ce que**
l'élément de fixation (10) est un pied d'aube et/ou la matière de base d'aube est une matière TiAl.

8. Turbomachine, notamment turbine à gaz, de préférence moteur d'aéronef, comprenant un élément d'aube, en particulier selon l'une des revendications précédentes, et un logement (11) dans lequel l'élément d'aube est disposé, l'élément d'aube comportant un élément de fixation (10) au moyen duquel l'élément d'aube est disposé dans le logement de la turbomachine, l'élément d'aube comportant au niveau de l'élément de fixation (10) une matière de base d'aube,
le logement ayant dans la région d'une surface de contact avec l'élément de fixation (10) une surface de logement qui est formée à partir d'une matière de surface de logement dont la ductilité est supérieure à celle la matière de base d'aube,
**caractérisée en ce que**
la surface de logement (2) est formée par une matière pseudo-élastique ou super-élastique.

9. Turbomachine selon la revendication 8,
**caractérisée en ce que**
la surface de logement (2) est formée par un revêtement.

10. Turbomachine selon l'une des revendications 8 à 9,
**caractérisée en ce que**
la surface de logement (2) est formée par un alliage pseudo-élastique ou super-élastique à base de Co-Ni-Al, de Co-Ni-Ga, de Al-Ni-Co ou de Ni-Mn-Ga, en particulier par du Al35Ni20Co20 ou du Ni₂MnGa.

11. Turbomachine selon l'une des revendications 8 à 10,
**caractérisée en ce que**
la surface de logement (2) est conçue pour être poreuse ou compacte.

12. Turbomachine selon l'une des revendications 8 à 11,
**caractérisée en ce que**
l'élément de fixation (10) est un pied d'aube et le logement (11) est un logement de pied d'aube et/ou la matière de base d'aube est une matière TiAl.

13. Procédé de réalisation d'une turbomachine selon l'une des revendications 8 à 12 dans lequel il est prévu un logement dans lequel un élément d'aube peut être disposé, l'élément d'aube comportant un élément de fixation au moyen duquel l'élément d'aube est disposé dans le logement de la turbomachine, et l'élément d'aube comportant dans la région de l'élément de fixation une matière de base d'aube, le logement étant revêtu, dans la région d'une surface de contact avec l'élément de fixation, d'une matière de surface de logement dont la ductilité est supérieure à celle de la matière de base d'aube,
**caractérisé en ce que**
la matière de surface de logement est formée par une matière pseudo-élastique ou super-élastique,
le revêtement étant réalisé par projection cinétique de gaz froid, projection thermique ou dépôt en phase gazeuse.

14. Procédé de fabrication d'un élément d'aube d'une turbomachine selon l'une des revendications 1 à 7, procédé dans lequel on prépare un corps de base d'aube comprenant un élément de fixation au moyen duquel l'élément d'aube est disposé dans un logement de la turbomachine, le corps de base d'aube étant formé à partir d'une matière de base d'aube, et une région externe étant disposée sur le corps de base d'aube par revêtement, la région externe comportant une matière externe qui est plus ductile que la matière de base d'aube du corps de base d'aube,
**caractérisé en ce que**
la matière externe est un matière pseudo-élastique ou super-élastique qui est appliquée par pulvérisation cinétique de gaz froid, pulvérisation thermique ou dépôt en phase gazeuse.
